Europäisches Patentamt

European Patent Office

Office européen des brevets

(11) Publication number : **0 474 613 A2**

# EUROPEAN PATENT APPLICATION

(21) Application number : **91850211.3**

(22) Date of filing : **04.09.91**

(51) Int. Cl.⁵ : **G01S 13/32, G01S 13/53**

(30) Priority : **06.09.90 SE 9002840**

(43) Date of publication of application :
**11.03.92 Bulletin 92/11**

(84) Designated Contracting States :
**AT BE CH DE DK ES FR GB GR IT LI LU NL SE**

(71) Applicant : **Bofors Electronics AB**
**S-175 88 Järfälla (SE)**

(72) Inventor : **Olsson, Kjell**
**Saningsvägen 17**
**S-175 45 Järfälla (SE)**

(74) Representative : **Olsson, Gunnar**
**Nobel Corporate Services Patents and**
**Trademarks**
**S-691 84 Karlskoga (SE)**

(54) **Radar means.**

(57)   The disclosure relates to a radar apparatus of the type which comprises a transmitter which substantially continuously transmits a modulated carrier wave signal, and a receiver for receiving the carrier wave signal (the echo signal) reflected against an object, and in which the carrier wave signal is modulated with an encoding signal in which one bit in the code is of a duration which is several times longer than the period time of the carrier wave signal, and in which the code of several bits forms a block which is characterized by modulation of a carrier wave with constant frequency. Furthermore, the frequency of the carrier wave is changed between the blocks, so that the transmitter transmits one block at a carrier wave frequency which is different from the carrier wave frequency or frequencies which the receiver is set to receive. A received binary coded signal is, after A/D conversion (1), supplemented with an additional value which is the measurement value with reversed sign, the measurement value or measurement value with reversed sign, respectively, being, in each time step, fed to different range bins (3), where the range bins (3) receive a sequence of measurement values, and in which the given, transmitted code unambiguously determines, for each time step, to which range bin (3) the measurement value or measurement value with reversed sign, respectively, is to be fed, the integration of inputted values in a range bin (3) providing information on a possible target in this range bin.

EP 0 474 613 A2

Fig.1

## TECHNICAL FIELD

The present invention relates to a radar apparatus of the type which comprises a transmitter which substantially continuously transmits a modulated carrier wave signal, and a receiver for receiving the carrier wave signal (the echo signal) reflected against an object, and in which the carrier wave signal is modulated with an encoding signal, in which one bit in the code is of a duration which is several times longer than the period time of the carrier wave signal, and in which the code of several bits forms a block which is characterized by modulation of a carrier wave at constant frequency. Furthermore, the frequency of the carrier wave is changed between the blocks so that the transmitter transmits a block at a carrier wave frequency which is different from the carrier wave frequency or frequencies which the receiver is set to receive.

## BACKGROUND ART

A radar apparatus of this type is disclosed in Swedish patent application No. 8902983-9 and is particularly intended for military applications, in which the radar may be exposed to counter agents.

In this type of radar, the encoding signal constitutes a key part. Since this signal is of such a nature that a bit in the code is of a duration which is several times longer than the period time of the carrier wave signal, and the code of several bits forms a block, and the frequency of the carrier wave is changed between the blocks, the block length may be rendered considerably shorter than the corresponding range of the radar, which implies that the radar transmitter often changes frequency during the time it takes to receive an echo response from the range limit, which increases the defence capability of the radar against detection and jamming.

In air defence systems, use is made of tracking radar for indicating a sight on a target. A tracking radar must then be capable of detecting small aircraft and missiles at low altitude above land or sea. On land, radar reflections against individual objects may be very large. For example mountains, buildings, masts etc. give much more powerful radar echoes than small aircraft and missiles. However, aircraft and missiles move at high velocity which imparts to the radar echo a doppler shift of the radar frequency. This doppler shift can be employed to distinguish moving targets at different speeds, and primarily to distinguish moving targets from fixed targets, so that small aircraft can be detected even in the vicinity of large ground reflections.

In the radar apparatus according to patent application No. 8902983-9, the receiver can simultaneously receive the signal from blocks of at least two separate frequencies, which implies that the receiver can dedicate certain analysis functions to a certain range gate, and partly other analysis functions to another range gate by selecting corresponding blocks which have been reflected from each respective range gate and coupling these to respective analysis functions in the receiver. The specification in the above-mentioned application discloses by way of example that a range gate can be analysed in respect of the doppler effect of a moving target, and another range gate can be analysed in respect of good range resolution to targets.

One problem in this context is that, on the use of long coded blocks of the same frequency in such a radar, the doppler shift can give a phase change during the length of the block which is greater than 180°. Since the encoding of the carrier frequency signal is effected by means of, for example, byphase coding, it will be readily be perceived that this impedes detection.

## OBJECT OF THE PRESENT INVENTION

One object of the present invention is therefore to be able in a radar apparatus of the above-disclosed type to utilize the doppler shift in order to distinguish moving targets at different speeds from one another, and primarily to distinguish moving targets from fixed targets, and in which encoding may take place without incurring the above-mentioned problems.

Our co-pending patent application No. , describes how the doppler information can be obtained by (FFT) analysis (Fast Fourier Transform). The present invention discloses a radar apparatus in which the doppler information is utilized in a different way and which is particularly advantageous in respect of targets which are located close to the radar.

The reason for this is that, in an air defence application, it may be of interest to track targets until they approach very close to the radar, in order to be able to provide information on the position of the target to the air defence system, for combatting the target also in this situation.

That which may substantially be considered as novel to and characterizing the present invention is apparent from the characterizing clause of appended Claim 1.

## DESCRIPTION OF THE ACCOMPANYING DRAWINGS

The present invention will now be described in greater detail hereinbelow, with particular reference to the accompanying drawings which show one example of how the apparatus may be designed, and in which:

Fig. 1 shows how the receiver has been modified for analysing received "samples"; and

Fig. 2 is a specific corrector unit for large, proximal targets.

## DESCRIPTION OF PREFERRED EMBODIMENT

When the radar apparatus according to the present invention is described hereinbelow, only those parts of the radar which are germane to the invention, i.e. how the doppler information is processed in the receiver, will be considered more closely. The rest of the radar apparatus may be of the type which is described in the above-mentioned Swedish patent application No 8902983-9.

Thus, the transmitter includes a carrier wave generator which continuously transmits a carrier wave signal, a modulator for modulating with an encoding signal whose basic frequency, the code frequency, is determinative of the range resolution of the radar, and a transmitter antenna.

The nature of the encoding signal is such that one bit in the code is of a duration which is several times longer than the period number of the carrier wave signal, and in which the code of several bits forms a block, a block being characterized by modulation of a carrier wave at constant frequency. The frequency of the carrier wave is changed between the blocks, so that the transmitter transmits one block with a carrier wave frequency which is different from the carrier wave frequency or frequencies which the receiver is set to receive. The block length may be made considerably shorter than the corresponding range of the radar, implying that the radar transmitter often changes frequency during the time it takes to receive an echo response from the range limit, which renders detection and jamming of the radar more difficult.

The receiver includes an antenna and different signal processing means of per se known type. In the signal processing, the received signal is correlated with the transmitted code. The correlator may be of different lengths in order to suit relevant code lengths. The correlation results are subsequently processed in an analyser.

As opposed to the receiver in the above-mentioned Swedish patent application No. 8902983-9, a received "sample" is, according to the present invention, distributed to all relevant range bins in parallel in accordance with the code pattern.

If, for example, binary coding is employed, the detected "sample" is also given a value with reversed sign, and all range bins which, at this moment of time, are to have a minus sign according to the code, receive the "sample" with reversed sign, while the remaining range bins are fed with the "sample" without sign change. In the next time step, a new sample is obtained from the A/D converter, and this is fed both with and without sign change to each respective range bin in accordance with the pattern of the code for each respective range.

By such means, each range bin will be fed with incoming "samples" with corrected signs according to the given code. Integration of "samples" in each respective range bin will then give successive growth of signal, if there is a detectable target in the range bin - otherwise the integration provides a quantification of the amount of uncorrelated monkey chatter or disturbance. If the target in the relevant range bin is moving, with large doppler shift, the "integration" can be effected in the form of FFT analysis or any other of the above-outlined methods for doppler analysis.

Sample $S_{n+1}$ from the A/D converter 1 is allocated the + sign or - sign in a sign creator 2. Each range bin 3 is thereafter fed via switches 4 controlled by the code with the sample value with that sign which applies according to the code for each respective range bin. In range bin 1, all samples $S_1$ to $S_n$ inclusive have thus been given signs such that a target in range bin 1 is added with each sample, to a high end total. The corresponding applies to range bin 2, and so on. A target which is at a range corresponding to range bin 2 will thus not be added up in range bin 1, since the input of sample to range bin 1 does not take place with those signs which correspond to targets for the correct range bin, in this case bin 2.

The analysis procedure described in the foregoing of successively building up information in parallel on targets in different range bins may be advantageous when the intention is to correct four time side lobes of targets in other range bins.

In an AA application, it may be of interest to track targets until they approach very close to the radar in order to be able to provide information on the position of the target to the air defence system for combatting the target also in this situation.

Targets which are located close to the radar give powerful echoes back to the receiver of the radar, as compared with targets which are located distally. The power of the radar echo fades with the forth potency of the range from the radar. This effect is partly compensated for in the radar under consideration here, in that proximal targets do not reflect power back for such a long period of time as distal targets. When a code block is transmitted from the radar, the receiver of the radar receives radar echo from earlier transmitted blocks, and the receiver does not open for the relevant block until this has reached a suitable distance from the radar. This implies that the most immediately proximal area adjacent the radar will already have been passed by the code block when the receiver opens to receive radar echo from this block. This also implies that targets outside of this area will have been passed by the greater fraction of the code block, and that it is only a minor fraction of the reflected code block which reaches an open radar receiver. Hence, proximal targets give radar echo of high amplitude but for short duration, which gives an equalizing effect.

The proximally located targets are seen for only a short time by the receiver of the radar and, as a result, cannot utilize a long code. This implies that these targets may give rise to relatively large time side lobes, and that there may be a specific need to correct them. In such instance, it may be of interest to create range bins for the proximal area of the radar, and employ the above-described method with parallel feeding of these range bins with received "samples". Early information will then be obtained of large closely proximal targets, and it will be possible to carry out side lobe correction in the more distal range bins, or quite simply refrain from using the "samples" which are dominated by the large proximal targets for detecting targets in distal range bins.

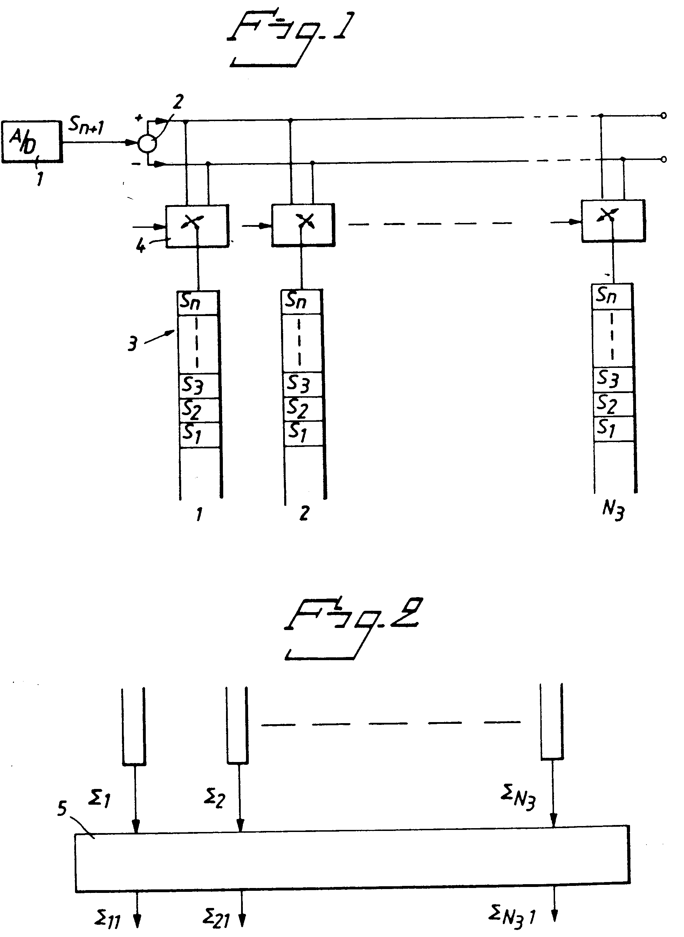

One example of such correction is shown in Fig. 2. A correction unit 5 is suitably equipped with a threshold which senses the level of the sum totals $\Sigma_1$, $\Sigma_2$ ... $\Sigma N3$ from the range bins 1-$N_3$, and if one of the totals from each respective range bin is greater than a given value, this implies that the target at this range is so large that it might make an error contribution in other range bins. The size of the error contribution in the different bins is determined by the code, for which reason this value may be subtracted from the value obtained in each respective range bin. The corrected value $\Sigma_{11}$ is, thus, the result of possible correction of the value $\Sigma_1$, and so on.

## Claims

1. A radar apparatus of the type which comprises a transmitter which substantially continuously transmits a modulated carrier wave signal, and a receiver for receiving the carrier wave signal (the echo signal) reflected against an object, and in which the carrier wave signal is modulated with an encoding signal in which one bit in the code is of a duration which is several times longer than the period time of the carrier wave signal, and in which the code of several bits forms a block which is characterized by modulation of a carrier wave with constant frequency, and the frequency of the carrier wave being changed between the blocks so that the transmitter transmits one block with a carrier wave frequency which is different from the carrier wave frequency or frequencies which the receiver is set to receive, **characterized in that** a received binary coded signal is, after A/D conversion (1), supplemented with an additional value which is the measurement value with reversed sign, the measurement value and measurement value with reversed sign, respectively, being thereafter, in each time step, fed to different range bins (3) in which the range bins receive a sequence of measurement values, and in which the given transmitted code unambiguously determines, for each time stage, to which range bin the measurement value or measurement value with reversed sign, respectively, is to be fed, integration of inputted values in a range bin providing information on possible targets in this range bin.

2. The radar apparatus as claimed in Claim 1, **characterized in that** the receiver only receives a part of a reflected code block from targets which are located at close range from the radar such that the range bins (3) take care of targets at corresponding range, targets in the immediate vicinity receiving fewer measurement values in their range bin than targets located more distally and capable of utilizing the entire code block.

3. The radar apparatus as claimed in Claim 2, **characterized in that** a comparison is made of the results from range bins (3) in the immediate vicinity of the radar with given levels, and when these levels are exceeded, corresponding measurement values from the A/D converter (1) containing these target signals are disposed not to contribute to the results of the target analysis of other target ranges.

Fig.1

Fig.2